# FASCICULE DE BREVET EUROPEEN

(11) **EP 1 064 167 B1**
(45) Date de publication et mention de la délivrance du brevet: **19.06.2002**
(21) Numéro de dépôt: 99910441.7
(22) Date de dépôt: 26.03.1999
(51) Int. Cl.: B60K 15/035, F16K 17/36

(54) **DISPOSITIF DE MISE A L'AIR LIBRE POUR UN RESERVOIR DE CARBURANT DE VEHICULE AUTOMOBILE**
ENTLÜFTUNGSVORRICHTUNG FÜR DEN KRAFTSTOFFTANK EINES KRAFTFAHRZEUGES
VENTILATING DEVICE FOR MOTOR VEHICLE FUEL TANK

(30) Priorité: 27.03.1998 FR 9804020
(43) Date de publication de la demande: 03.01.2001
(73) Titulaire: COMPAGNIE DE MATERIEL ET D'EQUIPEMENTS TECHNIQUES C.O.M.E.T., F-60304 Senlis Cedex (FR)
(72) Inventeur: ROMANEK, Christian, F-60430 Noailles (FR)
(74) Mandataire: Rinuy, Santarelli
(86) Numéro de dépôt international: FR9900711
(87) Numéro de publication internationale: WO9950087

(56) Documents cités:
- EP-A- 0 803 671
- FR-A- 2 740 402
- US-A- 4 760 858

## Description

L'invention concerne un dispositif de mise à l'air libre pour un réservoir de carburant de véhicule automobile.

L'invention se rapporte plus particulièrement à un dispositif de mise à l'air libre pour un réservoir de carburant de véhicule automobile, du type dans lequel une valve est munie d'une bille qui est agencée dans une chambre dans laquelle débouchent un orifice d'entrée relié au réservoir et un orifice de sortie. et du type dans lequel l'un des orifices débouche au centre d'une face supérieure, concave et de révolution d'axe vertical, d'une paroi inférieure horizontale de la chambre, la bille étant en appui sur la face supérieure concave de telle sorte que. lorsque le véhicule est à l'arrêt en position sensiblement horizontale, la bille, sous l'effet de son poids, gagne le centre de la surface concave et obture l'orifice, tandis que, sous l'effet des vibrations engendrées lors de la mise en marche ou du roulage du véhicule, la bille est écartée de l'orifice et libère la mise à l'air libre du réservoir.

De manière courante. on prévoit dans ce type de dispositif que la face supérieure de la paroi intérieure de la chambre soit par exemple tronconique de révolution d'axe vertical de telle sorte que, dès que le véhicule est à l'arrêt, la bille retombe au fond du cône pour obturer l'orifice qui débouche au centre de ce cône

L'angle au sommet du cône est dicté par un certain nombre de paramètres liés notamment à l'inclinaison maximale du véhicule à l'arrêt et à la dimension de la bille, cette dimension conditionnant son poids et conditionnant donc l'obturation de la valve lorsque, lors du remplissage du réservoir, apparaît dans celui-ci une surpression des gaz qui ne doivent pas s'échapper par le dispositif de mise à l'air libre.

Ce dernier paramètre, qui conditionne l'étanchéité de la valve lorsque le véhicule est à l'arrêt, impose donc de trouver un compromis entre le diamètre de la bille et l'angle au sommet du cône formé par la face supérieure de portée de la valve. Pour ne pas avoir à utiliser une bille de trop grand diamètre, il sera donc nécessaire d'utiliser une surface de portée présentant un angle au sommet relativement réduit.

Or, l'utilisation d'un tel angle réduit fera que, même au cours du roulage du véhicule, la bille restera sensiblement au centre de la surface tronconique et perturbera donc la circulation des gaz au travers de la valve.

L'invention a donc pour objet de proposer une nouvelle conception d'un tel dispositif de mise à l'air libre qui permette à la fois de réduire la taille, et donc le coût. de la bille mais qui permette également de satisfaire à la fois aux deux conditions antagonistes que sont d'une part-une bonne étanchéité de la valve lorsque le véhicule est à l'arrêt, et au contraire une libre circulation des gaz au travers de celle-ci lorsque le véhicule roule.

Dans ce but, l'invention propose un dispositif de mise à l'air libre pour un réservoir de carburant de véhicule automobile, du type dans lequel une valve est munie d'une bille qui est agencée dans une chambre dans laquelle débouchent un orifice d'entrée d'axe relié au réservoir et un orifice de sortie, et du type dans lequel l'un des orifices débouche au centre d'une face supérieure concave d'une paroi inférieure de la chambre, la bille étant en appui sur la face supérieure concave de telle sorte que, lorsque le véhicule est à l'arrêt en position sensiblement horizontale, la bille, sous l'effet de son poids, gagne le centre de la surface concave et obture l'orifice, tandis que, sous l'effet des vibrations engendrées lors de la mise en marche ou du roulage du véhicule, la bille est écartée de l'orifice et libère la mise à l'air libre du réservoir, caractérisé en ce que la pente, par rapport à l'horizontale, de la surface supérieure concave diminue en s'éloignant radialement de l'axe.

Selon d'autres caractéristiques de l'invention :
- la variation de la pente est continue ;
- la variation de la pente est discontinue ;
- la face supérieure concave comporte, autour de l'orifice à obturer, une première partie annulaire centrale qui est tronconique, d'axe vertical et évasée vers le haut, et qui forme une portée pour la bille lorsque celle-ci et en position d'obturation, et la surface supérieure concave comporte une seconde partie annulaire périphérique qui entoure la première, qui est également tronconique, d'axe vertical et évasée vers le haut, et dont l'angle au sommet est supérieur à celui de la portée de manière à présenter une faible pente ;
- la partie périphérique présente un angle au sommet de l'ordre de 160 degrés ;
- la portée présente un angle au sommet de l'ordre de 145 degrés ; et
- la bille présente un diamètre d'environ 12,7 mm.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe d'une valve d'un dispositif de mise à l'air libre conforme aux enseignements de. l'invention, illustrée lorsque le véhicule est à l'arrêt ;
- la figure 2 est une vue similaire à celle de la figure 1 illustrant la valve lorsque le véhicule est en cours de roulement ;
- la figure 3 est une vue de détail agrandie de la figure 1 illustrant plus particulièrement la différence de conicité de la partie de portée par rapport à la partie périphérique de la valve selon l'invention.

De manière connue, ainsi que cela est décrit par exemple dans le document FR-A-2.740.402 qui sert de base à la présentation en deux parties de la revendication 1, les réservoirs de carburant de véhicule automobile sont généralement pourvus d'un dispositif de mise à l'air libre qui comporte notamment une canalisation de mise à l'air libre dont une portion inférieure débouche dans le réservoir, au niveau d'un point haut de celui-ci, et dont une portion supérieure est par exemple reliée à un dispositif de récupération et de filtrage des vapeurs. Une valve est interposée entre les portions inférieure et supérieure de la canalisation de mise à l'air libre.

Le dispositif de mise à l'air libre permet de compenser la baisse du niveau de carburant dans le réservoir en permettant l'admission d'air à l'intérieur du réservoir afin que la pression régnant dans celui-ci soit sensiblement constante.

Au contraire, afin d'éviter toute déformation du réservoir susceptible d'entraîner sa rupture, ce dispositif doit également permettre l'évacuation des gaz qui seraient par exemple comprimés à cause d'une élévation de température.

Toutefois, il est souhaitable que, lorsque le véhicule est à l'arrêt, les vapeurs contenues dans le réservoir ne puissent pas s'échapper directement à l'air libre, que ce soit par simple évaporation ou sous l'effet du remplissage du réservoir lors d'une opération de ravitaillement en carburant.

Le dispositif de mise à l'air libre 10 qui est illustré de manière partielle sur les figures comporte donc une valve 12 permettant de réaliser une telle obturation du circuit de mise à l'air libre lorsque le véhicule est à l'arrêt.

La valve 12 comporte une chambre 14 qui est pourvue d'au moins un orifice d'entrée 16 et un orifice de sortie 18. L'orifice d'entrée 16, qui est aménagé au travers d'une paroi horizontale inférieure 19 qui délimite la chambre 14, est délimité par une surface cylindrique interne 17 d'axe A1 et il est par exemple relié au réservoir de carburant. L'orifice de sortie 18 débouche quant à lui par exemple dans une paroi latérale de la chambre 14 ou dans une paroi supérieure de celle-ci.

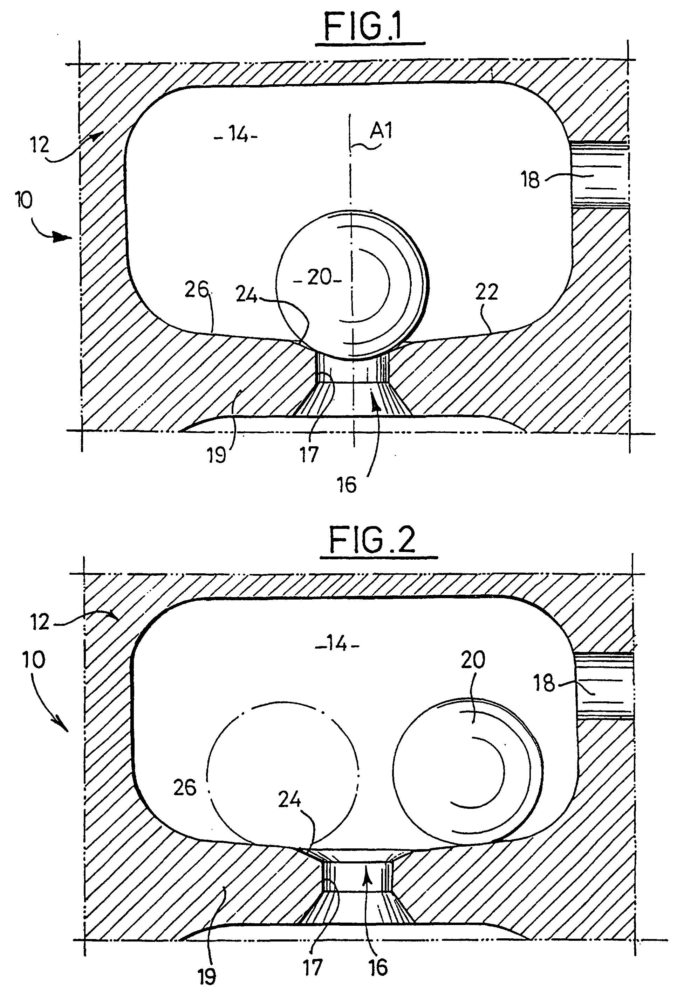

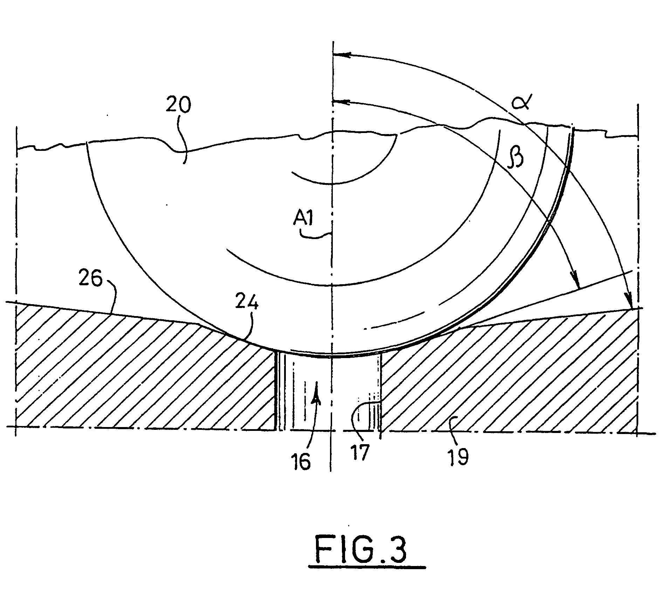

Une bille 20 est agencée à l'intérieur de la chambre 14 de telle sorte qu'elle est en appui, sous l'effet de son poids, sur la face supérieure 22 de la paroi inférieure 19 de la chambre 14. Conformément aux enseignements de l'invention, la face supérieure 22 comporte une première partie centrale annulaire 24 qui est en forme de tronc de cône évasé vers le haut, de révolution d'axe vertical A1, et dans laquelle débouche l'orifice 16. La partie centrale annulaire 24 est destinée à former une portée pour la bille 20 lorsque le véhicule est à l'arrêt ainsi que cela est illustré aux figures 1 et 3.

Autour de la portée 24, la face supérieure 22 présente une partie périphérique 26 qui est elle aussi tronconique d'axe vertical A1, évasée vers le haut, et sur laquelle la bille 20 est amenée à se déplacer sous l'effet de vibrations engendrées à la mise en route ou lors du roulage du véhicule.

Conformément aux enseignements de l'invention, et ainsi que cela ressort plus particulièrement de la figure 3, la portée tronconique 24 présente un demi-angle au sommet α qui est inférieur au demi-angle au sommet β de la partie périphérique 26.

Ainsi, la portée 24 présente une pente par rapport à l'horizontale qui est supérieure à la pente de la partie périphérique 26.

La pente de la partie périphérique 26 peut être choisie relativement faible. En conséquence, l'angle β peut être relativement important. La seule contrainte qui détermine l'angle β est que la bille doit regagner obligatoirement le centre de la face supérieure 22 quelle que soit la position du véhicule par rapport à l'horizontale lorsqu'il est arrêté. On pourra ainsi choisir, pour la portée tronconique périphérique 26, un demi-angle au sommet d'environ 80°, soit un angle au sommet d'environ 160 degrés.

Au contraire, lorsque la bille 20 est en position d'obturation, en appui sur la portée 24, il n'est pas suffisant que celle-ci se maintienne dans cette position. Il est aussi nécessaire que, même lorsque le véhicule est incliné, la bille 20 soit en mesure de résister à une surpression dans le réservoir qui peut par exemple être due au fait que l'on remplisse celui-ci avec du carburant.

Or, si le véhicule est incliné, la résultante de l'action de la pesanteur sur la bille n'est plus coaxiale à l'axe A1 de l'orifice 16 et de la portée 24. De la sorte, la force nécessaire au soulèvement de la bille 20, exercée par la pression des gaz sur la partie inférieure de la bille qui obture l'orifice 16, ne représente plus qu'un faible pourcentage du poids de la bille.

Pour empêcher le soulèvement de la bille, on a donc le choix entre une diminution du demi-angle au sommet de la portée tronconique 24 ou une augmentation du diamètre de la bille. Cependant, cette dernière solution a l'inconvénient d'augmenter le coût et l'encombrement de celle-ci.

Un bon compromis entre ces deux paramètres pourra par exemple être de choisir une bille d'un diamètre de 12,7 mm et une portée tronconique 24 dont le demi-angle au sommet vaut approximativement 72,5°, soit un angle au sommet de 145 degrés.

Bien entendu, le diamètre de l'orifice d'entrée 16 doit être inférieur à celui de la bille 20, mais il doit aussi être choisi inférieur au diamètre du cercle de contact par lequel la bille 20 est en appui sur la portée 24. Le diamètre de l'orifice 16 doit donc être inférieur au diamètre de la bille 20 multiplié par le sinus du demi-angle au sommet de la portée 24.

Cet angle de conicité assure un bon maintien de la bille 20 en position d'obturation, mais, dès que les vibrations chassent la bille 20 vers la partie périphérique 26, elle n'est pas ramenée de manière trop forte vers le centre de la face supérieure 22.

Ainsi, grâce à la nouvelle conception en deux parties de la face supérieure 22 sur laquelle repose la bille 20, on peut obtenir à la fois une bonne étanchéité de la valve lorsque le véhicule est à l'arrêt, y compris pour les fortes inclinaisons du véhicule, et au contraire, lorsque les vibrations du roulage du véhicule chassent la bille 20 vers la partie périphérique 26, un libre passage des gaz au travers de la valve 12.

Dans l'exemple de réalisation qui vient d'être décrit, il y a une discontinuité de la pente entre la portée 24 et la partie périphérique 26. Bien entendu, on pourra prévoir que ces deux parties de la face supérieure 22 soient raccordées par un élément de surface tel que la variation de pente, selon un rayon issu de l'axe A1, se fasse de manière continue.

De même, on peut choisir de ne pas réaliser les deux parties 24, 26 sous la forme de surfaces rigoureusement tronconiques. Toutefois, on veillera à ce que la pente de la face supérieure soit globalement décroissante lorsque l'on s'éloigne de l'axe A1 selon un rayon.

## Revendications

1. Dispositif de mise à l'air libre pour un réservoir de carburant de véhicule automobile, du type dans lequel une valve (12) est munie d'une bille (20) qui est agencée dans une chambre (14) dans laquelle débouchent un orifice d'entrée (16) d'axe (A1) relié au réservoir et un orifice de sortie (18), et du type dans lequel l'un des orifices (16) débouche au centre d'une face supérieure (22) concave d'une paroi inférieure (19) de la chambre (19), la bille (20) étant en appui sur la face supérieure concave (22) de telle sorte que, lorsque le véhicule est à l'arrêt en position sensiblement horizontale, la bille (20), sous l'effet de son poids, gagne le centre de la surface concave (22) et obture l'orifice (16), tandis que, sous l'effet des vibrations engendrées lors de la mise en marche ou du roulage du véhicule, la bille (20) est écartée de l'orifice (16) et libère la mise à l'air libre du réservoir,
**caractérisé en ce que** la pente, par rapport à l'horizontale, de la surface supérieure concave (22) diminue en s'éloignant radialement de l'axe (A1).

2. Dispositif de mise à l'air libre selon la revendication 1, **caractérisé en ce que** la variation de la pente est continue.

3. Dispositif de mise à l'air libre selon la revendication 1, **caractérisé en ce que** la variation de la pente est discontinue.

4. Dispositif de mise à l'air libre selon la revendication 3, **caractérisé en ce que** la face supérieure concave (22) comporte, autour de l'orifice à obturer, une première partie annulaire centrale (24) qui est tronconique, d'axe vertical (A1) et évasée vers le haut, et qui forme une portée pour la bille (20) lorsque celle-ci et en position d'obturation, et **en ce que** la surface supérieure concave (22) comporte une seconde partie annulaire périphérique (26) qui entoure la première (24), qui est également tronconique, d'axe vertical (A1) et évasée vers le haut, et dont l'angle au sommet (β) est supérieur à celui (α) de la portée (24) de manière à présenter une faible pente.

5. Dispositif de mise à l'air libre selon la revendication 4, **caractérisé en ce que** la partie périphérique (26) présente un angle au sommet (β) de l'ordre de 160 degrés.

6. Dispositif de mise à l'air libre selon l'une des revendications 4 ou 5, **caractérisé en ce que** la portée (24) présente un angle au sommet (α) de l'ordre de 145 degrés.

7. Dispositif de mise à l'air libre selon l'une quelconque des revendications précédentes, **caractérisé en ce que** la bille (20) présente un diamètre d'environ 12,7 mm.

## Claims

1. Device for opening a motor vehicle fuel tank to atmosphere, of the type in which a valve (12) is provided with a ball (20) arranged in a chamber (14) into which there open out an inlet orifice (16) of axis (A1) connected to the tank and an outlet orifice (18), and of the type in which one of the orifices (16) opens out at the centre of a concave top face (22) of a bottom wall (19) of the chamber (19), the ball (20) being in abutment on the concave top face (22) so that, when the vehicle is stopped in a substantially horizontal position, the ball (20), under the effect of its weight, reaches the centre of the concave surface (22) and closes off the orifice (16), whilst, under the effect of vibration caused when the vehicle is started up or is running, the ball (20) is moved away from the orifice (16) and releases the opening of the tank to atmosphere, **characterised in that** the slope, with respect to the horizontal, of the concave top surface (22) decreases on moving away radially from the axis (A1).

2. Device for opening to atmosphere according to Claim 1, **characterised in that** the variation in the slope is continuous.

3. Device for opening to atmosphere according to Claim 1, **characterised in that** the variation in the slope is discontinuous.

4. Device for opening to atmosphere according to Claim 3, **characterised in that** the concave top face (22) has, around the orifice to be closed off, a first central annular part (24) which is frustoconical, has a vertical axis (A1) and is splayed towards the top, and which forms a supporting surface for the ball (20) when the latter is in the closure position, and **in that** the concave top surface (22) has a second peripheral annular part (26) surrounding the first (24), which is also frustoconical, has a vertical axis (A1) and is splayed towards the top, and whose angle at the apex (β) is greater than that (α) of the supporting surface (24) so as to have a slight slope.

5. Device for opening to atmosphere according to Claim 4, **characterised in that** the peripheral part (26) has an angle at the apex (β) of around 160 degrees.

6. Device for opening to atmosphere according to one of Claims 4 or 5, **characterised in that** the supporting surface (24) has an angle at the apex (α) of around 145 degrees.

7. Device for opening to atmosphere according to any one of the preceding claims, **characterised in that** the ball (20) has a diameter of approximately 12.7 mm.

## Patentansprüche

1. Entlüftungsvorrichtung für einen Treibstofftank in einem Kraftfahrzeug, bei der ein Ventil (12) mit einer Kugel (20) versehen ist, welche in einer Kammer (14) angeordnet ist, in die eine mit dem Tank verbundene, eine Achse (A1) aufweisende Eingangsöffnung (16) und eine Ausgangsöffnung (18) münden, und bei der eine der Öffnungen (16) im Zentrum einer konkaven Oberseite (22) einer unteren Wand (19) der Kammer (14) mündet, wobei die Kugel (20) auf der konkaven Oberseite (22) derart aufliegt, daß die Kugel (20), sobald das Fahrzeug in einer im wesentlichen horizontalen Stellung stillsteht, unter der Wirkung ihres Gewichts das Zentrum der konkaven Oberseite (22) erreicht und die Öffnung (16) verschließt, während die Kugel (20) unter der Wirkung der beim Anfahren bzw. Rollen des Fahrzeugs erzeugten Schwingungen von der Öffnung (16) entfernt wird und die Entlüftung des Tanks freigibt, **dadurch gekennzeichnet, daß** die Neigung der oberen konkaven Fläche (22) in Bezug auf die Horizontale um so mehr abnimmt, je weiter man sich von der Achse (A1) entfernt.

2. Entlüftungsvorrichtung nach Anspruch 1, **dadurch gekennzeichnet, daß** die Neigungsänderung kontinuierlich verläuft.

3. Entlüftungsvorrichtung nach Anspruch 1, **dadurch gekennzeichnet, daß** die Neigungsänderung diskontinuierlich verläuft.

4. Entlüftungsvorrichtung nach Anspruch 3, **dadurch gekennzeichnet, daß** die konkave Oberseite (22) um die zu verschließende Öffnung herum einen ersten ringförmigen, kegelstumpfartigen, zentralen, eine Achse (A1) aufweisenden und nach oben ausladenden Teil (24) aufweist, welcher eine Auflagefläche für die Kugel (20) bildet, wenn diese sich in Verschlußstellung befindet und dadurch, daß die konkave Oberfläche (22) einen zweiten ringförmigen Umfangsteil (26) aufweist, welcher den ersten Teil (24) umgibt, ebenfalls kegelstumpfartig ist, eine Achse (A1) aufweist und nach oben auslädt, und dessen Spitzenwinkel (β) größer als der (α) bei der Auflage (24) ist, so daß dadurch eine schwache Neigung vorliegt.

5. Entlüftungsvorrichtung nach Anspruch 4, **dadurch gekennzeichnet, daß** der Umfangsteil (26) einen Spitzenwinkel (β) in der Größenordnung von 160 Grad aufweist.

6. Entlüftungsvorrichtung nach irgendeiner der Ansprüche 4 oder 5, **dadurch gekennzeichnet, daß** die Auflage (24) einen Spitzenwinkel (α) in der Größenordnung von 145 Grad aufweist.

7. Entlüftungsvorrichtung nach irgendeiner der vorangehenden Ansprüche, **dadurch gekennzeichnet, daß** die Kugel (20) einen Durchmesser von ungefähr 12,7 mm aufweist.
